# EUROPÄISCHE PATENTANMELDUNG

(11) **EP 3 643 375 A1**
(43) Veröffentlichungstag der Anmeldung: **29.04.2020**
(21) Anmeldenummer: 18020553.6
(22) Anmeldetag: 24.10.2018
(51) Int. Cl.: B01D 3/14

(54) **TRENNKOLONNE UND ANLAGE SOWIE VERFAHREN ZUR TRENNTECHNISCHEN BEARBEITUNG EINES ODER MEHRERER FLUIDE**

(71) Anmelder: Linde Aktiengesellschaft, 80331 München (DE)
(72) Erfinder: Hecht, Thomas, 82178 Puchheim (DE); Kirchner, Lars, 01279 Dresden (DE)
(74) Vertreter: Meilinger, Claudia Sabine

(57) **Zusammenfassung**

Die vorliegende Erfindung betrifft eine Trennkolonne (100, 200) mit mehreren Trennmodulen (1), die jeweils Mantelstrukturen (2), die sich zwischen ersten Enden (3) und zweiten Enden (4) erstrecken, und Packungen (5), die innerhalb der Mantelstrukturen (2) angeordnet sind, aufweisen. Es ist vorgesehen, dass die Mantelstrukturen (2) parallel zueinander angeordnet und zwischen den ersten Enden (3) und den zweiten Enden (4) gasdicht zueinander ausgebildet sind, dass den ersten Enden (3) jeweils Flüssigkeitsverteiler (6) zugeordnet sind, dass den zweiten Enden (4) jeweils Flüssigkeitssammler (7) zugeordnet sind, dass die Flüssigkeitsverteiler (6) fluidisch miteinander gekoppelt sind, und dass die Flüssigkeitssammler (7) fluidisch miteinander gekoppelt sind. Eine Anlage und ein Verfahren zur trenntechnischen Bearbeitung eines oder mehrerer Fluide ist ebenfalls Gegenstand der vorliegenden Erfindung.

## Beschreibung

Die vorliegende Erfindung betrifft eine Trennkolonne sowie eine Anlage und ein Verfahren zur trenntechnischen Bearbeitung eines oder mehrerer Fluide unter Verwendung einer entsprechenden Trennkolonne gemäß den Oberbegriffen der jeweiligen unabhängigen Patentansprüche.

### Stand der Technik

In unterschiedlichen Bereichen der Verfahrenstechnik werden Trennkolonnen zur trenntechnischen Bearbeitung von Fluiden eingesetzt. Eine Trennkolonne soll hier einen trenntechnischen Apparat bezeichnen, der typischerweise zylindrisch aufgebaut ist und insbesondere mit einer oder mit mehreren geordneten oder ungeordneten Packungen oder Einbauten ausgestattet sein kann.

Beispielsweise kann die Trennkolonne als eine Rektifikationskolonne ausgebildet sein, welche dafür eingerichtet ist, ein oder mehrere, gasförmig oder flüssig oder in Form eines Zweiphasengemischs mit flüssigen und gasförmigen Anteilen, ggf. auch im überkritischen Zustand, eingespeiste Komponentengemische durch Rektifikation zumindest teilweise aufzutrennen, also aus dem oder den Komponentengemischen jeweils Reinstoffe oder Stoffgemische mit anderer Zusammensetzung zu bilden. Eine Rektifikation umfasst wiederholte Verdampfungs- und Kondensationsvorgänge, insbesondere auf bzw. unter Verwendung der erwähnten Packungen oder Einbauten. Grundsätzlich kann eine Rektifikationskolonne als eine im Gegenstrom kaskadierte Anordnung von Destillationsstufen verstanden werden.

Eine Trennkolonne gemäß der vorliegenden Erfindung muss jedoch nicht als Rektifikationskolonne ausgebildet sein. Die vorliegende Erfindung eignet sich vielmehr für eine Vielzahl weiterer Trennkolonnen zur trenntechnischen Bearbeitung von Fluiden, beispielsweise Waschkolonnen, Absorptionskolonnen, Flashkolonnen, Strippkolonnen und dergleichen. Solche Trennkolonnen können sich baulich von Rektifikationskolonnen unterscheiden, beispielsweise dadurch, dass andere oder keine zusätzlichen Apparate wie Kondensatoren oder Verdampfer vorgesehen sind. Zu Merkmalen von entsprechenden Trennkolonnen sei auf einschlägige Lehrbücher verwiesen, siehe beispielsweise K. Sattler, "Thermische Trennverfahren: Grundlagen, Auslegung, Apparate", 3. Auflage 2001, Wiley-VCH, Weinheim. Eine "Trennung" in einer entsprechenden Trennkolonne muss dabei nicht notwendigerweise zur vollständigen Separation von Komponenten eines Komponentengemischs unter Erhalt von Reinstoffen führen. Eine Trennung eines Komponentengemischs liegt im hier verwendeten Sprachgebrauch vielmehr auch dann vor, wenn mittels dieser Fraktionen unterschiedlicher Zusammensetzungen gebildet werden.

Verfahren und Anlagen zur Tieftemperaturzerlegung von Luft, für die sich eine Trennkolonne gemäß der vorliegenden Erfindung in besonderer Weise eignet, sind aus der Fachliteratur bekannt, siehe beispielsweise aus H.-W. Häring (Hrsg.), Industrial Gases Processing, Wiley-VCH, 2006, insbesondere Abschnitt 2.2.5, "Cryogenic Rectification". Anlagen zur Tieftemperaturzerlegung von Luft weisen typischerweise Anordnungen mit zumindest zwei Rektifikationskolonnen zur Bereitstellung von stickstoff- und sauerstoffreichen Luftprodukten auf. Typischerweise sind dabei zumindest eine sogenannte Hochdrucksäule, auch als Drucksäule bezeichnet, und eine sogenannte Niederdrucksäule als Rektifikationskolonnen vorgesehen. In Luftzerlegungsanlagen, die zur Gewinnung weiterer Luftprodukte dienen, ist typischerweise zumindest eine weitere Rektifikationskolonne vorhanden, beispielsweise eine sogenannte Rohargonsäule und ggf. eine sogenannte Reinargonsäule. Auf die zitierte Fachliteratur wird verwiesen.

Neben Luftzerlegungsanlagen profitieren beliebige weitere Verfahren, bei denen eine trenntechnische Bearbeitung eines Fluids unter Verwendung einer Trennkolonne durchgeführt wird, von den in der vorliegenden Anmeldung vorgeschlagenen Maßnahmen. Beispiele für entsprechende Verfahren sind die kryogene Zerlegung von Erdgas, Trennverfahren zur Aufbereitung von Gasgemischen, die durch stoffumwandelnde Prozesse bereitgestellt werden, Trennkolonnen in Raffinerieprozessen und dergleichen. Die vorliegende Erfindung ist nicht auf spezifische Verfahren, insbesondere nicht auf die Luftzerlegung, beschränkt.

Insbesondere Trennkolonnen mit strukturierten Packungen für Luftzerlegungsanlagen müssen herkömmlicherweise je nach Anwendungsfall in unterschiedlichen Durchmessern und ggf. mit unterschiedlichen Packungstypen sowie spezifisch dimensionierten Flüssigkeitsverteilern hergestellt werden. Hieraus ergibt sich eine ausgesprochen große Varianz für die Fertigung. So werden, je nach den Anforderungen des spezifischen Verfahrens, Packungen beispielsweise als Einscheibenpackungen oder Segmentpackungen hergestellt und beispielsweise Rohrverteiler oder Topfverteiler in einstufiger oder zweistufiger Ausformung sowie unterschiedliche Sammlertypen, beispielsweise in Form von Tragsammlern mit oder ohne Entnahme und kleinerem oder größerem Durchmesser, verwendet.

Die große Varianz in den erläuterten Ausgestaltungen für die herkömmlichen Anlagen führt zu hohen Fertigungskosten aufgrund der großen Unterschiedlichkeit der jeweils bereitzustellenden Bauteile, der zu verwendenden Werkzeuge und Halbzeuge sowie Vielzahl der jeweils beteiligten Fertigungsstätten. Generell kann bei herkömmlichen Anlagen festgestellt werden, dass der Aufwand in der Erstellung mit steigendem Durchmesser, einer steigenden Bettlänge ab einer optimalen Bettlänge, welche wiederum von der Packungsdichte abhängt, mit steigender Flüssigfilmdicke, bei der Verwendung segmentierter Packungen im Vergleich zu Einscheibenpackungen, bei zunehmenden Fertigungstoleranzen und bei zunehmenden Einbautoleranzen jeweils ebenfalls zunehmen.

Da sich die genannten Einflussfaktoren bei gleichzeitigem Auftreten gegenseitig verstärken bzw. zumindest aufsummieren, ist eine erhöhte Designsicherheit bei der Auslegung von entsprechenden Kolonnen erforderlich. Mit anderen Worten werden Spezifikationen vorgegeben, die derart bemessen sind, dass sie auch bei einer Aufsummierung von Negativeinflüssen noch die vorgegebene Produktqualität sicherstellen. Dies hat in einzelnen Projekten jedoch ggf. unnötige Mehrkosten zur Folge, kann aber außerdem auch unerwünschte Konsequenzen für den Prozess haben. Beispielsweise können Anlagen mit überdimensioniertem Sauerstoffabschnitt eine unerwünscht hohe Sauerstoffreinheit liefern. Die hohe Anzahl der in das Kolonnendesign einfließenden Parameter erschwert die Standardisierung.

Die vorliegende Erfindung stellt sich vor diesem Hintergrund die Aufgabe, für Anlagen unterschiedlicher Größe und unterschiedlichem Produktspektrum eine einfachere, flexiblere und kostengünstigere Ausstattung mit an die jeweiligen Anforderungen angepassten Trennkolonnen zu ermöglichen.

### Offenbarung der Erfindung

Vor diesem Hintergrund schlägt die vorliegende Erfindung eine Trennkolonne sowie eine Anlage und ein Verfahren zur trenntechnischen Bearbeitung eines oder mehrerer Fluide unter Verwendung einer entsprechenden Trennkolonne mit den jeweiligen Merkmalen der unabhängigen Patentansprüche vor. Bevorzugte Ausgestaltungen der vorliegenden Erfindung sind Gegenstand der jeweiligen abhängigen Ansprüche sowie der nachfolgenden Beschreibung.

### Vorteile der Erfindung

Im Rahmen der vorliegenden Erfindung wurde erkannt, dass anstelle der Verwendung unterschiedlicher Durchmesser von Trennkolonnen in Abhängigkeit von der geforderten Kapazität und der hierdurch bedingten, oben erläuterten Varianz, beispielsweise in den Packungsarten, Sammlern und Verteilern, die Parallelschaltung einzelner im Wesentlichen identisch ausgebildeter Trennmodule, jedoch ggf. auch eine entsprechende serielle Verschaltung entsprechender Trennmodule, besondere Vorteile bietet. Hierdurch können insbesondere die erwähnten Varianzen deutlich reduziert werden. Die im Rahmen der Erfindung vorgeschlagenen Maßnahmen können beispielsweise mit den bei der Herstellung von Rohrbündelwärmetauschern verwendeten Maßnahmen verglichen werden, bei welchen einzelne Wärmetauschrohre in einem Rohrboden miteinander verbunden und parallel durchströmt werden.

Die vorliegende Erfindung sieht dabei beispielsweise für jeden Rektifikationsabschnitt einer Rektifikationskolonne eine kapazitätsabhängige Anzahl von parallelen, insbesondere strukturiert gepackten, Trennmodulen vor, die gasdicht mit einem Rohrboden verbunden werden können. Jedes einzelne Trennmodul kann dabei mit einem standardisierten Verteiler ausgebildet werden, der mit einem gemeinsamen Flüssigkeitsverteil- und Flüssigkeitssammelsystem kommunizierend verbunden ist. Ein entsprechender Verteiler kann als geschlossener Verteiler ausgebildet werden, so dass die Bauhöhe des Flüssigkeitsverteil- bzw. Flüssigkeitssammelsystem bzw. als effektive Verteilerhöhe wirksam werden kann. Anstelle eines Einlaufgerinnes bei einer zweiphasigen Zuspeisung können im Rahmen der Erfindung beispielsweise die Phasen des Eintrittsstroms außerhalb des Systems getrennt und dem Gas- und Flüssigkeitsraum in getrenntem Zustand zugeführt werden.

Durch den Einsatz der vorliegenden Erfindung können die wesentlichen Nachteile von Trennkolonnen mit kapazitätsabhängig variierendem Durchmesser überwunden werden, wie sie zuvor beschrieben wurden. Der Durchmesser der jeweiligen Trennmodule ist im Rahmen der vorliegenden Erfindung insbesondere fixiert, was wiederum deren Wirksamkeit definiert festlegt. Die Packung eines entsprechenden Trennmoduls kann aufgrund von dessen vergleichsweise geringer Größe als Einscheibenpackung ausgebildet werden, so dass auch diesbezüglich die effizienteste Bauweise verwendet werden kann. Im Rahmen der Erfindung können die Trennmodule als Serienprodukt hergestellt werden, wodurch eine effizientere Fertigung und Qualitätskontrolle erfolgen kann.

Im Rahmen der Erfindung kann ferner die notwendige Packungshöhe zur Realisierung einer theoretischen Trennstufe (HetB, Höhe eines theoretischen Bodens) für die Trennkolonnen mit geringeren Streubreiten bereitgestellt werden, wodurch die Designmarge in der Kolonnenhöhe, die wie eingangs erläutert aus Sicherheitsgründen herkömmlicherweise verwendet wird, ohne Risiko verringert werden kann. Hieraus ergeben sich geringere Coldbox-Höhen, ein einfacher Transport sowie eine kostengünstigere Fertigung. Im Rahmen der Erfindung kann der gesamte Ablauf der Erstellung entsprechender Trennkolonnen vereinfacht werden, da nur noch die Rohrböden und Flüssigkeitssammler projektspezifisch ausgewählt werden müssen. Die jeweiligen Trennmodule können bereits bei Auftragserteilung in Fertigung gehen.

In herkömmlichen Stoffaustauschkolonnen skalieren die Abstände zwischen unterschiedlichen Einbauten typischerweise mit dem effektiven Durchmesser. Durch die erfindungsgemäß vorgeschlagene Aufteilung in kleinere Trennmodule können die Abstände reduziert werden, was zu einer geringeren Gesamtbauhöhe der Trennkolonne führt. Durch eine externe Phasentrennung kann, wie erwähnt, bei zweiphasiger Zuspeisung zusätzlich Bauhöhe eingespart werden.

Insbesondere können im Rahmen der vorliegenden Erfindung auch mehrere durch entsprechende Trennmodule gebildete Rektifikationseinheiten mit Außenverrohrungen verbunden werden. Hierdurch können stärkere Wandstärken bei größeren Durchmessern vermieden werden. In einzelne Kolonnenmodule können im Gas- und Flüssigkeitsraum Druckverlustelemente installiert werden, um eine Gleichverteilung der Strömung und damit die Wirksamkeit des Gesamtsystems zu verbessern.

Insgesamt schlägt die vorliegende Erfindung vor diesem Hintergrund eine Trennkolonne mit mehreren Trennmodulen vor, wobei die Trennmodule jeweils Mantelstrukturen, die sich zwischen ersten Enden und zweiten Enden erstrecken, und Packungen, die innerhalb der Mantelstrukturen angeordnet sind, aufweisen. Die Trennmodule bzw. ihre jeweiligen Mantelstrukturen können im Rahmen der vorliegenden Erfindung insbesondere rohrförmig, d.h. insbesondere zumindest abschnittsweise zylindrisch, ausgebildet sein.

Gemäß einer alternativen Ausführungsform der Erfindung können die Trennmodule bzw. ihre jeweiligen Mantelstrukturen im Querschnitt auch vieleckig, insbesondere rechteckig, insbesondere quadratisch, oder (regelmäßig) drei- oder sechseckig, ausgebildet sein. Dies ermöglicht eine besonders platzsparende Anordnung, die im Querschnitt insgesamt die Form eines entsprechenden Netzes aus Rechtecken, Quadraten oder Dreiecken (bei rechteckigem, quadratischem oder dreieckigem Querschnitt) oder bienenwabenförmig (bei sechseckigem Querschnitt) ausgebildet sein kann. Fluidverteiler und -sammler können hieran angepasst sein, um Maldistributionen bzw. Totbereiche zu verhindern. Auch in einem derartigen Fall sind die Mantelstrukturen jedoch rohrförmig (hier z.B. in Form eines Rohrs mit quadratischem oder sechseckigem Querschnitt) ausgebildet.

Die Trennmodule einer erfindungsgemäß bereitgestellten Trennkolonne bzw. ihre Mantelstrukturen können insbesondere mit den ersten bzw. zweiten Enden jeweils an Rohrböden enden, also an Querstrukturen, welche sich in Ebenen erstrecken, die senkrecht zu den jeweiligen Längsachsen der Trennmodule liegen, und welche eine der Anzahl an Trennmodulen entsprechende Anzahl an Öffnungen aufweisen, an welche sich die jeweiligen Mantelstrukturen anschließen. Die insbesondere rohrförmigen Mantelstrukturen können dauerhaft mit den Rohrböden verbunden, insbesondere verschweißt, werden. Durch eine entsprechende Ausgestaltung sind die Mantelstrukturen bis auf ihre jeweiligen ersten und zweiten Enden geschlossen und ein Gasaustausch zwischen dem Innenraum der jeweiligen Mantelstrukturen ist nur über deren Enden möglich. Mit anderen Worten besteht zwischen den ersten und den zweiten Enden vorteilhafterweise keine weitere Querverbindung zwischen den Trennmodulen.

Die vorliegende Erfindung kann sich insbesondere der bereits erwähnten strukturierten bzw. geordneten Packungen bedienen. Strukturierte bzw. geordnete Packungen sind umfangreich in der Fachliteratur beschrieben, beispielsweise bei M. Kraume, Packungskolonnen, In: Transportvorgänge in der Verfahrenstechnik, VDI-Buch, Springer 2012. Der Fachmann wählt aus dem Bekannten dabei je nach den geforderten technischen Wirkungen bzw. den vorliegenden Randbedingungen aus.

Eine strukturierte bzw. geordnete Packung kann insbesondere aus dünnen, gewellten und optional gelochten Metallplatten bzw. Drahtnetzen bestehen. Bei strukturierten bzw. geordneten Packungen aus gewellten Metallplatten können die durch die Wellung gebildeten Rippen in unterschiedlichen Winkeln relativ zu einer Bezugsrichtung, insbesondere der Mittelachse einer Stoff- und/oder Wärmeaustauschkolonne, angeordnet sein, wobei die Rippen benachbarter Platten typischerweise in einem Winkel von 90° zueinander stehen. Entsprechende Rippen können in unterschiedlichen Bereichen auch eine unterschiedliche Ausrichtung aufweisen und dabei beispielsweise in oberen und unteren Bereichen annähernd in der Vertikalen verlaufen.

Typische Anwendungsbereiche für entsprechende strukturierte bzw. geordnete Packungen aus gewellten Metallplatten sind Verfahren, in denen vergleichsweise geringe Berieselungsdichten und hohe Gasbelastungen vorliegen und ein geringer Druckverlust und eine hohe Trennleistung gefordert sind, beispielsweise im Bereich der Vakuumdestillation bzw. -rektifikation oder bei physikalischen oder chemischen Wäschen, bei sogenannten C3- bzw. C4-Splittern und Quenchkolonnen. Sie können sich auch insbesondere zum Einsatz im Rahmen der vorliegenden Erfindung eignen.

Die in derartigen strukturierten bzw. geordneten Packungen verwendeten Metallplatten können glatte oder dessinierte (weiter strukturierte) Oberflächen aufweisen, wobei jeweils optional eine Lochung vorgesehen ist. Ob eine weitere Strukturierung verwendet wird, richtet sich insbesondere nach der Anfälligkeit des jeweils betrachteten Prozesses bezüglich Fouling. Die Metallplatten können insbesondere aus unterschiedlichen Materialien wie C-Stahl, Aluminium oder Edelstahl gefertigt sein und je nach geforderter Belastbarkeit unterschiedliche Wandstärken aufweisen.

Je nach Anwendungsgebiet, und damit ggf. auch im Rahmen der vorliegenden Erfindung, können auch strukturierte bzw. geordnete Packungen aus Kunststoff eingesetzt werden, die in ihrem Aufbau grundsätzlich den erwähnten strukturierten bzw. geordneten Packungen aus gewellten Metallplatten entsprechen können, aber auch abweichend hierzu aufgebaut sein können wie nachfolgend noch weiter erläutert. Insbesondere können in entsprechenden Packungen Materialien wie Polyethylen, Polypropylen, Polyvinylidenfluorid und/oder Polytetrafluorethylen eingesetzt werden. Auch die Verwendung von strukturierten bzw. geordneten Packungen aus Keramik ist je nach Anwendungsfall im Rahmen der vorliegenden Erfindung möglich.

Anstelle der zuvor erläuterten Strukturierung in Form von gewellten (Metall-, Kunststoff- oder Keramik-) Platten können auch beispielsweise Gitterstrukturen aus den entsprechenden Materialien verwendet werden. Gitterstrukturpackungen eignen sich insbesondre für Anwendungen mit großen Ansprüchen an die Kapazität und/oder bei hohen Berieselungsdichten wie in Abgaswäschen, Strippern, Vorkühlern in Luftzerlegungsanlagen oder Aminwäschern.

In strukturierten bzw. geordneten Packungen, die im Rahmen der vorliegenden Erfindung zum Einsatz kommen können, können je nach Bedarf beispielsweise auch Metallgitter, Streckmetall oder Metallgewebe bzw. entsprechende Strukturen aus anderen Materialien zum Einsatz kommen. Sämtliche der im Rahmen der vorliegenden Erfindung eingesetzten Elemente können mittels generativer bzw. additiver Fertigungsverfahren (engl. Additive Manufacturing, AM) hergestellt werden. Die Fertigung erfolgt in diesem Fall direkt auf der Basis von Rechnermodellen aus formlosem oder formneutralem Material mittels chemischer und/oder physikalischer Prozesse. Es sind keine speziellen Werkzeuge erforderlich, die die jeweilige Geometrie des Werkstückes gespeichert haben wie beispielsweise Guss- oder Prägeformen.

Im Rahmen der vorliegenden Erfindung sind, wie erwähnt, die Mantelstrukturen insbesondere rohrförmig ausgebildet. Sie sind dabei parallel zueinander angeordnet und zwischen den ersten Enden und den zweiten Enden gasdicht zueinander ausgebildet. Wie erwähnt, kann dies insbesondere dadurch erzielt werden, dass die Mantelstrukturen mit ihren jeweiligen Enden mit Quereinbauten mit entsprechenden Aussparungen bzw. Öffnungen, insbesondere Rohrböden, verbunden werden.

Den ersten Enden der Mantelstrukturen sind im Rahmen der vorliegenden Erfindung jeweils Flüssigkeitsverteiler zugeordnet und den zweiten Enden der Mantelstrukturen sind jeweils Flüssigkeitssammler zugeordnet. Die vorliegende Erfindung verwendet also pro Trennmodul jeweils einen Flüssigkeitsverteiler bzw. einen Flüssigkeitssammler, die, weil die Trennmodule jeweils standardisiert ausgebildet werden können, ebenfalls vorteilhafterweise standardisiert ausgebildet sind. Mit dem Begriff einer "standardisierten" Ausbildung wird dabei hier eine identische oder im Wesentlichen identische Ausgestaltung, insbesondere Dimensionierung, bei einer Vielzahl von Trennmodulen bezeichnet.

Die erfindungsgemäß vorgeschlagenen Maßnahmen erleichtern, wie bereits mehrfach erwähnt, die Erstellung einer die Trennkolonne verwendenden Anlage und insbesondere die Standardisierung der jeweiligen Trennleistung. Flüssigkeitsverteiler und Flüssigkeitssammler sind für Stoffaustauschkolonnen, insbesondere Rektifikationskolonnen, aus dem Stand der Technik bekannt, so dass an dieser Stelle auf entsprechende Fachliteratur verwiesen werden kann. Es versteht sich, dass die Mantelstrukturen an ihren jeweiligen Enden auch Möglichkeit bzw. Einrichtungen zur Einspeisung bzw. zur Entnahme von Gas aufweisen. Diese können jedoch unterschiedlich ausgestaltet werden, so dass nachfolgend unter Bezugnahme auf die jeweiligen bevorzugten Ausgestaltungen hierauf Bezug genommen wird.

Insbesondere können im Rahmen der vorliegenden Erfindung die Trennmodule in mehreren Gruppen bereitgestellt sein, die jeweils mehrere Trennmodule umfassen. Durch die Zusammenfassung zu entsprechenden Gruppen, die insbesondere aus jeweilige bauliche Einheiten bereitgestellt werden können, ist eine nochmals bessere Modularisierung einer entsprechenden Trennkolonne möglich bzw. kann eine entsprechende Skalierung durch ein Hinzufügen von Gruppen von Trennmodulen anstelle von einzelnen Trennmodulen erfolgen. Entsprechende Gruppen können ebenfalls bereits vorgefertigt werden und werden vor Ort oder je nach den mengenmäßigen Anforderungen der jeweiligen Anlage bereitgestellt

Die Trennmodule bzw. entsprechende aus ihnen gebildete Gruppen können dabei insbesondere seriell hintereinander angeordnet sein, wobei auch mehrere ihrerseits parallel angeordnete Trennmodule bzw. entsprechende Gruppen zu seriellen Anordnungen zusammengefasst werden können. In einer bevorzugten Ausgestaltung umfassen dabei die mehreren Gruppen eine erste Gruppe und eine zweite Gruppe, wobei die Trennmodule der ersten Gruppe mit den Trennmodulen der zweiten Gruppe seriell gekoppelt sind, indem eine Fluidverbindung der Flüssigkeitssammler in der ersten Gruppe und der Flüssigkeitsverteiler in der zweiten Gruppe hergestellt ist. Auf diese Weise können mehrere Trennabschnitte bereitgestellt werden, wobei, wie erwähnt, die serielle Anordnung auch eine serielle Anordnung von ihrerseits parallel angeordneten Trennmodulen umfassen kann.

Insbesondere kann bei der soeben erläuterten Ausgestaltung der vorliegenden Erfindung die Fluidverbindung der Flüssigkeitssammler der ersten Gruppe und der Flüssigkeitsverteiler der zweiten Gruppe dadurch bereitgestellt werden, dass mehrere Einzelleitungen und wenigstens eine Sammelleitung bereitgestellt wird, wobei die Flüssigkeitssammler in der ersten Gruppe jeweils über eine der Einzelleitungen mit der wenigstens einen Sammelleitung und die wenigstens eine Sammelleitung über jeweils eine der Einzelleitungen mit den Flüssigkeitsverteilern in der zweiten Gruppe verbunden sind. Durch die Verwendung von Sammelleitungen können entsprechende Module bzw. Gruppen von Trennmodulen in besonders vorteilhafter Weise zusammengefasst werden, da hierbei nicht jede der Einzelleitungen mit jeder anderen der Einzelleitungen verbunden werden muss, sondern eine Verbindung in einfacher und kostengünstiger Weise über eine entsprechende Sammelleitung erfolgen kann. Durch die Zusammenfassung und erneute Verteilung lässt sich auch eine besondere gute Durchmischung erzielen.

Wie erwähnt, ist im Rahmen der vorliegenden Erfindung auch für einen Gasaustausch zwischen den entsprechenden Trennmodulen gesorgt. Insbesondere kann dabei zwischen den ersten Enden der Trennmodule der zweiten Gruppe und den zweiten Enden der Trennmodule in der ersten Gruppe ein Gasraum bereitgestellt werden. Dieser Gasraum kann in Form eines Leerraums zwischen entsprechenden Packungsbereichen innerhalb einer abgeschlossenen baulichen Einheit bereitgestellt werden; grundsätzlich ist jedoch auch eine Verrohrung möglich. Gas kann auf diese Weise insbesondere von der zweiten Gruppe der Trennmodule in die erste Gruppe übertreten. Ein Gasraum kann insbesondere als eine im Querschnitt kreisförmige Kammer ausgebildet sein. Ein Gasraum kann ferner insbesondere ausschließlich Öffnungen zu den Trennmodulen aufweisen und ansonsten bis auf optional verschließbare Gaseinspeise- und Gasentnahmeleitungen gasdicht abgeschlossen sein.

Zur Entnahme bzw. Einspeisung von Fluid insgesamt weist eine entsprechende Trennkolonne geeignete Mittel auf, wobei insbesondere die Flüssigkeitsverteiler in der ersten Gruppe mit einer Flüssigkeitseinspeiseleitung verbunden sind und die Flüssigkeitssammler in der zweiten Gruppe oder einer weiteren Gruppe, sofern weitere Gruppen vorhanden sind und weiter seriell mit den genannten Gruppen verbunden sind, mit einer Flüssigkeitsentnahmeleitung verbunden sind. Entsprechend kann zur Bereitstellung bzw. Entnahme von Gas vorgesehen sein, dass die ersten Enden der Trennmodule in der ersten Gruppe mit einer Gasentnahmeleitung verbunden sind und die zweiten Enden der Trennmodule in der zweiten Gruppe oder einer weiteren Gruppe mit einer Gaseinspeiseleitung verbunden sind.

Im Gegensatz bzw. zusätzlich zu den soeben erläuterten Maßnahmen, die eine serielle Verschaltung entsprechender Gruppen umfassen, kann, wie erwähnt, auch eine parallele Verschaltung erfolgen. Hierbei kann insbesondere vorgesehen sein, dass die Trennmodule in mehreren Gruppen parallel gekoppelt werden, indem die Flüssigkeitsverteiler in den mehreren Gruppen mit einer Flüssigkeitseinspeiseleitung verbunden sind und die Flüssigkeitssammler in den mehreren Gruppen mit einer Flüssigkeitssammelleitung verbunden sind. Auf diese Weise kann Flüssigkeit über standardisierte Flüssigkeitsverteiler auf die mehreren Trennmodule verteilt werden und aus entsprechenden mehreren Trennmodulen gesammelt werden. Zu den Vorteilen einer entsprechenden Ausgestaltung sei auf die obigen Erläuterungen nochmals ausdrücklich verwiesen.

In diesem Fall kann insbesondere auch vorgesehen sein, dass die ersten Enden der Trennmodule in mehreren Gruppen mit einer Gasentnahmeleitung verbunden sind und die zweiten Enden der Trennmodule in mehreren Gruppen mit einer Gaseinspeiseleitung verbunden sind.

Die vorliegende Erfindung erweist sich mit unterschiedlichen Anzahlen an Gruppen bzw. Trennmodulen in entsprechenden Gruppen als vorteilhaft, wobei sich die konkrete Anzahl von Gruppen bzw. Trennmodulen innerhalb entsprechender Gruppen nach den spezifischen Anforderungen des Verfahrens richtet. Insbesondere können zwei, drei oder vier Gruppen mit jeweils zwei, drei oder vier Trennmodulen bereitgestellt werden.

Die Stoffaustauschpackungen, die in den Trennmodulen einer erfindungsgemäß bereitgestellten Trennkolonne verwendet werden, können als geordnete oder als ungeordnete Packungen ausgebildet sein. Zu weiteren Details sei auf die obigen Erläuterungen bezüglich strukturierter Packungen ausdrücklich verwiesen.

Die vorliegende Erfindung erstreckt sich auch auf eine Anlage zur trenntechnischen Bearbeitung eines der mehrerer Fluide, insbesondere eine Anlage zur Tieftemperaturrektifikation von Luft, die sich erfindungsgemäß dadurch auszeichnet, dass eine Trennkolonne verwendet wird, wie sie zuvor in unterschiedlichen Ausgestaltungen beschrieben wurde.

Entsprechendes gilt auch für ein erfindungsgemäß vorgeschlagenes Verfahren zur trenntechnischen Bearbeitung eines oder mehrerer Fluide durch Rektifikation, beispielsweise zur Bearbeitung von Luft durch Tieftemperaturrektifikation, welches sich erfindungsgemäß dadurch auszeichnet, dass eine Trennkolonne nach einem der vorstehenden Ansprüche verwendet wird.

Die Erfindung wird nachfolgend unter Bezugnahme auf die beigefügten Zeichnungen näher erläutert, die Trennmodule und entsprechend gebildete Trennkolonnen gemäß Ausgestaltungen der vorliegenden Erfindung veranschaulichen.

### Kurze Beschreibung der Zeichnungen

Figur 1 veranschaulicht ein Trennmodul zum Einsatz in einer Trennkolonne gemäß einer Ausgestaltung der Erfindung.
Figur 2 veranschaulicht eine Trennkolonne gemäß einer Ausgestaltung der Erfindung im Längsschnitt.
Figur 3 veranschaulicht eine Trennkolonne gemäß einer Ausgestaltung der Erfindung im Längsschnitt.

Die Figuren 4A bis 4F veranschaulichen Trennkolonnen gemäß Ausgestaltungen der vorliegenden Erfindung im Querschnitt.

### Ausführliche Beschreibung der Zeichnungen

In den Figuren sind einander entsprechende Elemente mit identischen Bezugszeichen angegeben und werden der Übersichtlichkeit halber nicht wiederholt erläutert.

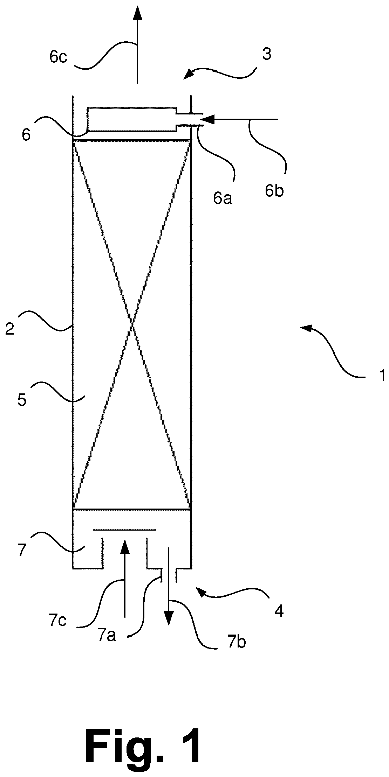

In Figur 1 ist ein Trennmodul zum Einsatz in einer Trennkolonne gemäß einer Ausgestaltung der vorliegenden Erfindung stark vereinfacht schematisch im Längsschnitt dargestellt und insgesamt mit 1 bezeichnet. Ein entsprechendes Trennmodul 1 kann auch in den nachfolgend veranschaulichten Ausgestaltungen der vorliegenden Erfindung zum Einsatz kommen, wo es daher nicht erneut erläutert wird. Es versteht sich dabei jedoch, dass die Trennmodule 1 in nachfolgend erläuterten Ausgestaltungen der vorliegenden Erfindung beispielsweise abweichende Querschnitte und dergleichen aufweisen können, wenngleich ein Hauptaspekt der vorliegenden Erfindung in einer Standardisierung derartiger Trennmodule 1 liegt.

In dem Trennmodul 1 ist innerhalb einer Mantelstruktur 2, die beispielsweise rohrförmig ausgebildet sein kann, eine Packung 5, die ein- oder mehrlagig bereitgestellt sein kann, vorgesehen. Die Mantelstruktur 2 erstreckt sich dabei zwischen einem ersten Ende 3 und einem zweiten Ende 4. Dem ersten Ende 3 ist ein Flüssigkeitsverteiler 6 zugeordnet, der über eine Zuleitung bzw. Einzelleitung 6a an ein in Figur 1 nicht gesondert veranschaulichtes Fluidverteilsystem angebunden ist. Wie mittels eines Pfeils 6b veranschaulicht, kann über die Einzelleitung 6a Flüssigkeit eingespeist werden, welche über den Flüssigkeitsverteiler 6 auf die Packung 5 verteilt wird.

Am zweiten Ende 4 ist ein Flüssigkeitssammler 7 bereitgestellt, über den Flüssigkeit, die aus der Packung 5 herabrieselt, gesammelt werden kann. Diese Flüssigkeit kann in Form eines hier mit 7b veranschaulichten Fluidstroms über eine Einzelleitung 7a abgezogen werden. Der Flüssigkeitssammler 7 kann beispielsweise in Form eines bekannten Glockenbodens ausgebildet sein. Ein Gasstrom, hier mit 7c bezeichnet, kann durch den Flüssigkeitssammler 7 in das Trennmodul 1 eintreten und damit in der Packung 5 aufsteigen. Entsprechendes Gas kann an dem ersten Ende 3 in Form eines mit 6c bezeichneten Gasstroms am Flüssigkeitsverteiler 6 vorbei abgezogen werden. Die vorliegende Erfindung zeichnet sich nun insbesondere durch eine mehrfache Verwendung entsprechender standardisierter Trennmodule 1 aus.

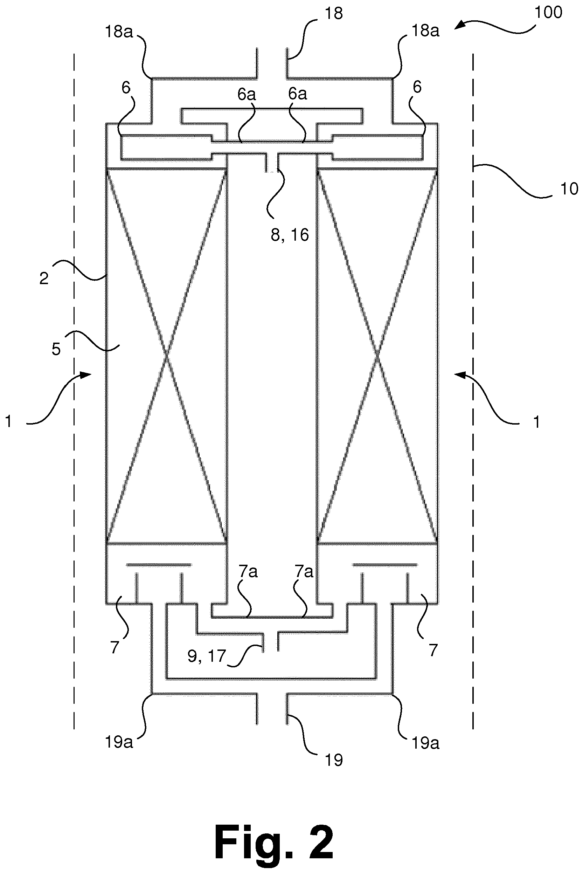

Figur 2 zeigt, insgesamt mit 100 bezeichnet, eine aus zwei entsprechenden Trennmodulen 1 gebildete Trennkolonne in Teildarstellung und im Längsschnitt. Die bereits unter Bezugnahme auf die Figur 1 erläuterten Elemente werden dabei nicht erneut beschrieben. Die Trennkolonne 100 weist hier einen Außenmantel 10 auf, innerhalb dessen die Trennmodule 1 angeordnet sind. Die Verwendung eines Außenmantels 10 ist jedoch rein optional.

Wie hier gezeigt, kann die Bereitstellung von Flüssigkeit insbesondere über eine Sammelleitung 8 erfolgen, welche sich auf die Einzelleitungen 6a, mit denen die Flüssigkeitsverteiler 6 angebunden sind, verteilt. Entsprechend kann aus den Flüssigkeitssammlern 7 die über die Einzelleitungen 7a abgezogene Flüssigkeit über eine mit 9 bezeichnete Sammelleitung gesammelt werden.

Die Sammelleitung 8 bildet dabei in der in Figur 2 veranschaulichten Ausgestaltung zugleich eine Flüssigkeitseinspeiseleitung 16, über die der Trennkolonne 100 insgesamt Flüssigkeit zugeführt werden kann. Entsprechend bildet die Sammelleitung 9, über die Flüssigkeit aus den Flüssigkeitssammlern 7 abgezogen werden kann, eine Flüssigkeitsentnahmeleitung 17, über die insgesamt Flüssigkeit aus der Trennkolonne 100 entnommen werden kann. Über eine Gaseinspeiseleitung 19a kann der Trennkolonne insgesamt Gas zugeführt werden, welches über mit 19 bezeichnete Einzelleitungen auf die jeweiligen Trennmodule verteilt werden kann. Entsprechend kann über eine Gasentnahmeleitung 18, die an Einzelleitungen 18a angebunden ist, Gas aus der Trennkolonne 100 insgesamt abgeführt werden.

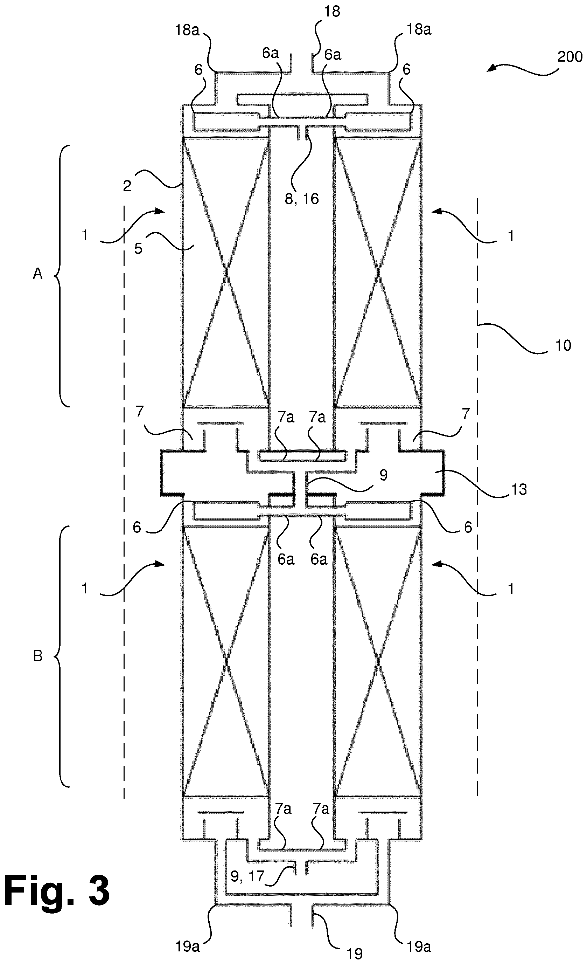

In Figur 3 ist eine Trennkolonne gemäß einer weiteren Ausgestaltung der vorliegenden Erfindung, wiederum in Teildarstellung und im Längsschnitt, veranschaulicht und insgesamt mit 200 bezeichnet. Wie hier werden jeweils die oben erläuterten Komponenten nicht wiederholt erläutert.

Zusätzlich zur parallelen Anordnung von entsprechenden Trennmodulen 1 gemäß Figur 2 ist hier eine serielle Anordnung veranschaulicht, mittels welcher insbesondere mehrere Trennabschnitte gebildet werden können. Es sind dabei hier zwei Gruppen von Trennmodulen 1 bereitgestellt, die jeweils mit A bzw. B bezeichnet sind und jeweils grundsätzlich wie die Trennkolonne 100 gemäß Figur 2 ausgebildet sein können. Flüssigkeit, die aus den Flüssigkeitssammlern 7 der Trennmodule 1 der Gruppe A abgezogen wird, kann über eine Sammelleitung 9 wiederum auf Flüssigkeitsverteiler 6 der zweiten Gruppe B von Trennmodulen 1 verteilt werden. Für einen Gasübertritt aus den Trennmodulen 1 der zweiten Gruppe B zu den Trennmodulen 1 der ersten Gruppe 11 ist ein Gasraum 13 bereitgestellt.

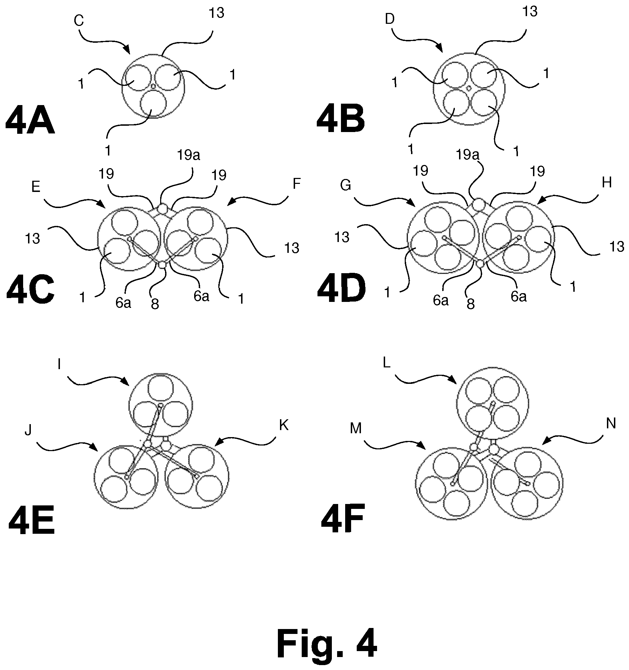

In Figur 4 sind in den Teilfiguren 4A bis 4F jeweils Ausgestaltungen von Trennkolonnen gemäß der vorliegenden Erfindung veranschaulicht. Es sind jeweils Querschnitte dargestellt und nur die für das Verständnis der Figuren wesentlichen Komponenten stark vereinfacht schematisch angedeutet.

Wie in Figur 4A veranschaulicht, sind dabei drei Trennmodule 1 mit einem gemeinsamen Gasraum 13 zum Sammeln von Gas und Flüssigkeit verbunden, wie grundsätzlich bereits in Figur 3 anhand zweier Trennmodule 1 veranschaulicht. Die drei Trennmodule 1 bilden damit auch hier eine Gruppe von Trennmodulen, die der besseren Unterscheidbarkeit halber mit C bezeichnet ist. Die Verwendung von Flüssigkeitssammlern und Flüssigkeitsverteilern kann grundsätzlich wie in den vorigen Figuren veranschaulicht erfolgen. In Figur 4B sind entsprechend vier Trennmodule 1 mit einem gemeinsamen Gasraum 13 verbunden und bilden eine Gruppe D von Trennmodulen 1, ansonsten gelten die vorstehenden Erläuterungen entsprechend.

In der Darstellung gemäß Figur 4C sind zwei Gruppen E, F von Trennmodulen vorgesehen, die über gemeinsame Leitungen miteinander gekoppelt sind. Zu letzteren sei insbesondere auf Figur 4A verwiesen. Die Leitungen sind hier nur zum Teil dargestellt. Die jeweiligen Gruppen E, F weisen dabei jeweils drei Trennmodule 1 auf, die nicht alle mit Bezugszeichen versehen sind. Figur 4D entspricht Figur 4C, mit dem einzigen wesentlichen Unterschied, dass hier jeweils vier Trennmodule 1 pro Gruppe bereitgestellt sind, wobei die Gruppen hier mit G und H bezeichnet sind.

Gemäß den Figuren 4E und 4F sind in entsprechenden Trennkolonnen jeweils drei (Figur 4E) bzw. 4 (Figur 4F) Trennmodule in einer Gruppe I, J, K bzw. L, M, N angeordnet. Die übrigen Erläuterungen gelten entsprechend. Die Einzelelemente sind nicht erneut mit Bezugszeichen versehen.

## Patentansprüche

1. Trennkolonne (100, 200) mit mehreren Trennmodulen (1), die jeweils Mantelstrukturen (2), die sich zwischen ersten Enden (3) und zweiten Enden (4) erstrecken, und Packungen (5), die innerhalb der Mantelstrukturen (2) angeordnet sind, aufweisen, **dadurch gekennzeichnet, dass** die Mantelstrukturen (2) parallel zueinander angeordnet und zwischen den ersten Enden (3) und den zweiten Enden (4) gasdicht zueinander ausgebildet sind, dass den ersten Enden (3) jeweils Flüssigkeitsverteiler (6) zugeordnet sind, dass den zweiten Enden (4) jeweils Flüssigkeitssammler (7) zugeordnet sind, dass die Flüssigkeitsverteiler (6) fluidisch miteinander gekoppelt sind, und dass die Flüssigkeitssammler (7) fluidisch miteinander gekoppelt sind.

2. Trennkolonne (200) nach Anspruch 1, bei der die Trennmodule (1) in mehreren Gruppen (A-N) bereitgestellt sind, wobei jede der Gruppen (A-N) mehrere Trennmodule (1) umfasst.

3. Trennkolonne (200-800) nach Anspruch 2, bei der die Gruppen (A-N) jeweils mit einem Gasraum (13) verbunden sind.

4. Trennkolonne (200) nach Anspruch 2 oder 3, bei der die Gruppen (A, B) eine erste Gruppe (A) und eine zweite Gruppe (B) umfassen, wobei die Trennmodule (1) der ersten Gruppe (A) mit den Trennmodule (1) der zweiten Gruppe (B) seriell gekoppelt sind, indem eine Fluidverbindung der Flüssigkeitssammler (7) in der ersten Gruppe (A) und der Flüssigkeitsverteiler (6) in der zweiten Gruppe (B) bereitgestellt ist.

5. Trennkolonne (200) nach Anspruch 4, bei der die Fluidverbindung zumindest teilwiese mittels Einzelleitungen (6a, 7a) und wenigstens einer Sammelleitung (9) bereitgestellt ist, wobei die Flüssigkeitssammler (7) in der ersten Gruppe (A) jeweils über eine der Einzelleitungen (7a) mit der wenigstens einen Sammelleitung (9) verbunden sind und die wenigstens eine Sammelleitung (9) über jeweils eine der Einzelleitungen (6a) mit den Flüssigkeitsverteilern (6) in der zweiten Gruppe (B) verbunden sind.

6. Trennkolonne (200) nach Anspruch 4 oder 5, bei der zwischen den ersten Enden (3) der Trennmodule (1) in der zweiten Gruppe (B) und den zweiten Enden (4) der Trennmodule (1) in der ersten Gruppe (A) ein verbindender Gasraum (13) bereitgestellt ist.

7. Trennkolonne (200) nach einem der Ansprüche 4 bis 6, bei der die Flüssigkeitsverteiler (6) in der ersten Gruppe (A) mit einer Flüssigkeitseinspeiseleitung (16) verbunden sind und die Flüssigkeitssammler (7) in der zweiten Gruppe (B) oder einer weiteren Gruppe mit einer Flüssigkeitsentnahmeleitung (17) verbunden sind.

8. Trennkolonne (200) nach einem der Ansprüche 4 bis 7, bei der die ersten Enden (4) der Trennmodule (1) in der ersten Gruppe (A) mit einer Gasentnahmeleitung (18) verbunden sind und die zweiten Enden (4) der Trennmodule (1) in der zweiten Gruppe (B) oder einer weiteren Gruppe mit einer Gaseinspeiseleitung (19) verbunden sind.

9. Trennkolonne nach Anspruch 2 oder 3, bei der die Trennmodule (1) der mehreren Gruppen (C-N) parallel gekoppelt sind, indem die Flüssigkeitsverteiler (6) in den mehreren Gruppen (C-N) mit einer Flüssigkeitseinspeiseleitung (16) verbunden sind und die Flüssigkeitssammler (7) in den mehreren Gruppen (C-N) mit einer Flüssigkeitssammelleitung (18) verbunden sind.

10. Trennkolonne nach Anspruch 9, bei der die ersten Enden (4) der Trennmodule (1) der mehreren Gruppen (C-N) mit einer Gasentnahmeleitung (18) verbunden sind und die zweiten Enden (4) der Trennmodule (1) der mehreren Gruppen (C-N) mit einer Gaseinspeiseleitung (19) verbunden sind.

11. Trennkolonne nach einem der Ansprüche 2 bis 10, bei der zwei, drei oder vier Gruppen (C-N) mit jeweils zwei bis vier Trennmodulen (1) bereitgestellt sind.

12. Trennkolonne nach einem der vorstehenden Ansprüchen, bei der die Packungen (5) als geordnete oder ungeordnete Packungen ausgebildet sind.

13. Anlage zur Bearbeitung eines oder mehrerer Fluide durch Rektifikation, **dadurch gekennzeichnet, dass** eine Trennkolonne (100, 200) nach einem der vorstehenden Ansprüche bereitgestellt ist.

14. Verfahren zur Bearbeitung eines oder mehrerer Fluide durch Rektifikation, **dadurch gekennzeichnet, dass** eine Trennkolonne (100, 200) nach einem der vorstehenden Ansprüche verwendet wird.
